# EUROPEAN PATENT APPLICATION

(11) **EP 1 602 460 A1**
(43) Date of publication of application: **07.12.2005**
(21) Application number: 05011693.8
(22) Date of filing: 31.05.2005
(51) Int. Cl.: B25J 19/00

(54) **Umbilical member managing system for industrial robot**

(30) Priority: 04.06.2004 JP 2004167388
(71) Applicant: FANUC LTD, Minamitsuru-gun, Yamanashi 401-0597 (JP)
(72) Inventor: Nihei, Ryo, Fujiyoshida-shi Yamanashi 403-0005 (JP); Inoue, Toshihiko, Fujiyoshida-shi Yamanashi 403-0017 (JP); Iwayama, Takatoshi Room 12-203, Minamitsuru-gun Yamanashi 401-0511 (JP)
(74) Representative: Schmidt, Steffen J.

(57) **Abstract**

An umbilical member managing system for an industrial robot. The system is provided with a manipulator (12) including a forearm (28) having a first longitudinal axis (28a), the forearm including a base (30), a first wrist member (32) joined to the base rotatably about the first axis (28a) and a second wrist member (34) joined to the first wrist member rotatably about a second axis (34a) generally perpendicular to the first axis; a working tool (14) mounted to the second wrist member of the forearm of the manipulator; an umbilical member (24) laid outside the forearm between the base and the second wrist member and connected to the working tool; an umbilical member guiding section (38) provided in the forearm and including a guide passage (36) extending generally parallel to the first axis to accommodate the umbilical member in a guidable manner; and an umbilical member retaining section (40) provided in the second wrist member for retaining the umbilical member at a proper position relative to the working tool. The umbilical member guiding section (38) is configured to follow a rotating motion of the first wrist member (32) about the first axis (28a) and to shift about the first axis. The umbilical member retaining section (40) is configured to follow a rotating motion of the second wrist member (34) about the second axis (34a) and to bend the umbilical member (24) in a radius not less than an allowable bend radius between the umbilical member guiding section (38) and the second wrist member (34).

## Description

### BACKGROUND OF THE INVENTION

### 1. Field of the Invention

The present invention relates to an umbilical member managing system for an industrial robot.

### 2. Description of the Related Art

When an industrial robot (hereinafter referred simply to as "robot") is used to perform a task such as laser processing, arc welding, sealing, or the like, it is required to supply energy such as electric power, laser radiation, etc., signals such as electric signals, light signals, etc., or materials such as gas, liquid, wire, etc., to a working tool (i.e., an end effector) mounted to the end of the arm of the robot. An umbilical member such as cable, pipe, etc., is generally used for supplying the energy, the material or the like. For example, in the case of laser processing, an optical fiber cable is used to supply a laser beam (or light energy) to a laser processing nozzle; in the case of arc welding, a conduit cable is used to feed a welding wire and electrical energy to an arc welding torch; while in the case of sealing, a sealant supply pipe is used to supply a sealant to a sealing nozzle. In the present application, a member such as cable, pipe, etc., used for supplying energy, signal, material, etc., is generally referred to as "an umbilical member".

In general, the umbilical member has a large allowable bending radius, and thus is laid in a space above the robot in a form exhibiting a large bending radius. When such a laying form is adopted, the umbilical member may be excessively pulled and thus be entangled with the robot's arm, or may be excessively loosened to change the curvature thereof to a large extent and thus interfere with surrounding objects, during a working operation wherein a wrist section at the end of the arm of the robot rotates, so that the supply of energy, material, etc. may become unstable. For example, in the case of laser processing, change of curvature of the optical fiber may lead to a power reduction of the laser beam, while in the case of arc welding, an unstable posture of the conduit cable may lead to failure in feeding of the wire.

In order to avoid the above problems, a measure has been proposed in which the umbilical member is incorporated inside the forearm of the robot. For example, Japanese Patent Publication No. 2606011 (JP-B-2606011) discloses a configuration of a laser processing robot, in which an optical fiber for conducting laser beam to a laser torch mounted to the end of an arm is laid through a hollow space provided in a rotary shaft portion of an arm (having a wrist turning axis). Also, Japanese Unexamined Patent Publication (Kokai) No. 2003-200376 (JP-A-2003-200376) discloses a configuration of an arc welding robot, in which a conduit cable for supplying a welding wire to a welding torch mounted to a wrist section at the end of an arm is laid through the interior space of the arm.

Each of the prior arts disclosed in the above publications adopts the configuration such that, in order to ensure the allowable bending radius of the umbilical member during the movement of the umbilical member following the operation of the arm, a part of the umbilical member is easily exposed outside of the arm. As a result, the exposed part of the umbilical member may be excessively pulled and thus be entangled with the arm, or may be excessively loosened and thus significantly change the curvature thereof. Therefore, a problem such as power reduction of the laser beam or failure of feeding the welding wire, has not been completely eliminated.

### SUMMARY OF THE INVENTION

It is an object of the present invention to provide an umbilical member managing system, for an industrial robot, in which it is possible to retain an umbilical member, for supplying energy, material, etc. to an working tool mounted to a wrist section, in a stable manner along a forearm, and thereby to prevent the umbilical member from being entangled with the robot or interfering with surrounding objects, during the operation of the robot, so as to permit energy, material, etc. to be supplied stably and accurately to the working tool.

To accomplish the above object, the present invention provides an umbilical member managing system comprising a manipulator including a forearm having a first longitudinal axis, the forearm including a base, a first wrist member joined to the base rotatably about the first axis and a second wrist member joined to the first wrist member rotatably about a second axis generally perpendicular to the first axis; a working tool mounted to the second wrist member of the forearm of the manipulator; an umbilical member laid outside the forearm between the base and the second wrist member and connected to the working tool; an umbilical member guiding section provided in the forearm and including a guide passage extending generally parallel to the first axis to accommodate the umbilical member in a guidable manner, the umbilical member guiding section being configured to follow a rotating motion of the first wrist member about the first axis and to shift about the first axis; and an umbilical member retaining section provided in the second wrist member for retaining the umbilical member at a proper position relative to the working tool, the umbilical member retaining section being configured to follow a rotating motion of the second wrist member about the second axis and to bend the umbilical member in a radius not less than an allowable bend radius between the umbilical member guiding section and the second wrist member.

In the umbilical member managing system as described above, the umbilical member retaining section may comprise a through hole provided in the second wrist member, the umbilical member being received in the through hole in a displaceable manner. Alternatively, the umbilical member retaining section may comprise a clamp member provided in the second wrist member, the umbilical member being secured to the clamp member.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a front view showing schematically an example of an overall configuration of a robot system in which an umbilical member managing system according to the present invention can be adopted;
Fig. 2A is a front view showing schematically a manipulator and an umbilical member laid around the manipulator, which constitute an umbilical member managing system according to an embodiment of the present invention;
Fig. 2B is a side view showing schematically the manipulator and the umbilical member of Fig. 2A;
Fig. 3A is a schematic front view, corresponding to Fig. 2A, showing an umbilical member guiding section and an umbilical member retaining section, which constitute the umbilical member managing system of Fig. 2A;
Fig. 3B is a schematic side view, corresponding to Fig. 2B, showing the umbilical member guiding section and the umbilical member retaining section of Fig. 3A;
Fig. 3C is a sectional view taken along a line III-III of Fig. 3A;
Figs. 4A to 4C show the behavior of the umbilical member during a rotating operation of a wrist section of the manipulator of Fig. 2A, over 180 degrees about a first axis;
Figs. 5A to 5C show the behavior of the umbilical member during a rotating operation of a wrist section of the manipulator of Fig. 2A, over 180 degrees about a second axis; and
Figs. 6A to 6C respectively show various modifications of the umbilical member retaining section, constituting the umbilical member managing system of Fig. 2A.

### DETAILED DESCRIPTION

The embodiments of the present invention are described below in detail, with reference to the accompanying drawings. In the drawings, the same or similar components are denoted by common reference numerals.

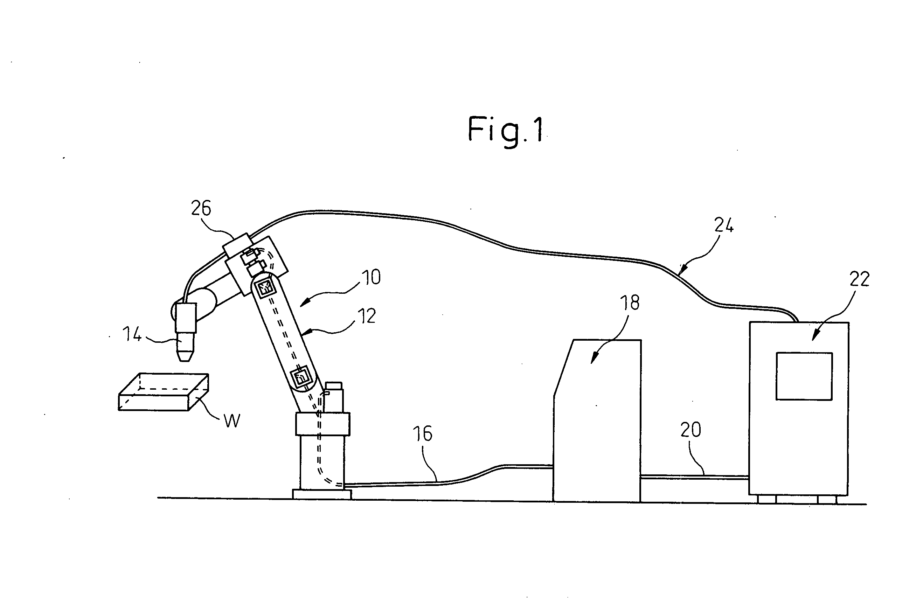

Referring to the drawings, Fig. 1 shows schematically an example of the overall configuration of a robot system, in which an umbilical member managing system according to the present invention can be adopted. The illustrated robot system includes a robot mechanism 10 of a five-axes vertically-articulated type, a working tool 14 mounted to the end of an arm structure or manipulator 12 of the robot mechanism 10, a robot controller 18 connected through a connection cable 16 to the robot mechanism 10 , an energy/material supply source 22 connected through a connection cable 20 to the robot controller 18, and an umbilical member 24 for supplying energy, material, etc. required for a task on a work W from the energy/material supply source 22 to the working tool 14. The robot controller 18 controls the motion of the manipulator 12 through the connection cable 16, and controls the supply (on/off of supply, intensity of energy, etc.) of the energy/material supply source 22 through connection cable 20.

In the above-described robot system, when laser processing is to be performed, a laser processing nozzle is used as the working tool 14, a laser oscillator is installed in the energy/material supply source 22, and light energy (or a laser beam) used for processing is fed from the energy/material supply source 22 to the working tool 14 through an optical fiber cable constituting the umbilical member 24. The umbilical member 24 is generally composed of, in addition to the optical fiber cable, pipes for an assist gas and cooling water, a cable for controlling sensors, and the like, which are gathered together or accommodated in a conduit.

When the arc welding is to be performed in the above robot system, an arc welding torch is used as the working tool 14, a welding-wire supply source is installed in the energy/material supply source 22, and the welding wire is fed from the energy/material supply source 22 to the working tool 14 through a conduit cable constituting the umbilical member 24. The umbilical member 24 generally incorporates therein, in addition to the welding wire, a linear conductor (or a cable) for applying welding voltage/current from a welding power source to the welding wire, a pipe for assist gas, and the like. In the case where the working tool 14 is the arc welding torch, a welding wire feeder 26 is mounted to the base of the forearm of the manipulator 12, as shown in Fig. 1.

When the sealing is to be performed in the above robot system, a sealing nozzle is used as the working tool 14, a sealant supply source is installed in the energy/material supply source 22, and a sealant is supplied from the energy/material supply source 22 to the working tool 14 through a sealant supply pipe constituting the umbilical member 24.

In each of the above-described system configurations, there are common problems resulting from the fact that the allowable bending radius of the umbilical member 14 is relatively large (e.g., an unstable supply of energy/material, the interference of the umbilical member with surrounding objects, etc., during the operation of the robot). The present invention solves these problems by measures common to different system configurations.

An umbilical member managing system according to an embodiment of the present invention, applicable by way of example to a robot system performing laser processing, will be described below.

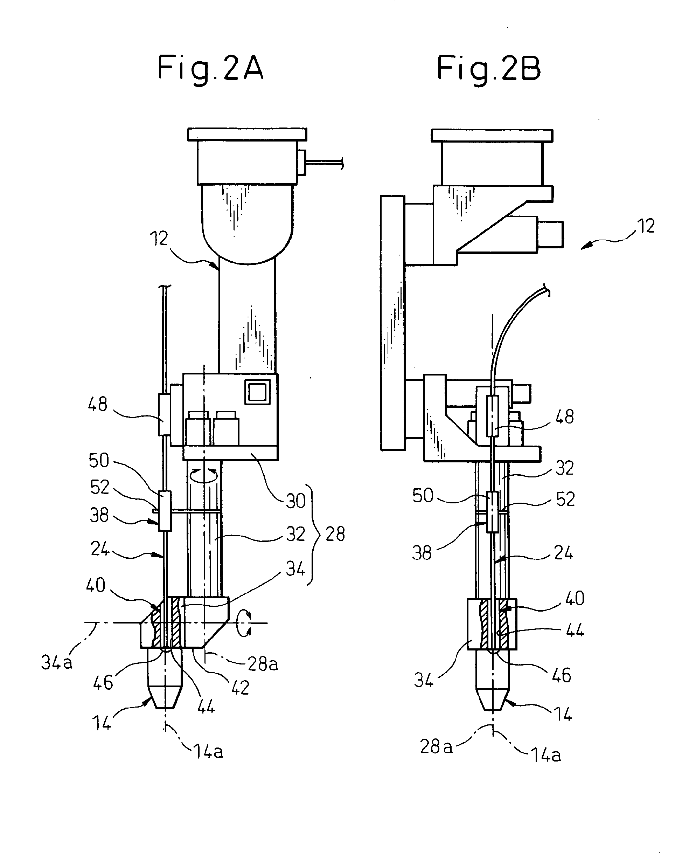

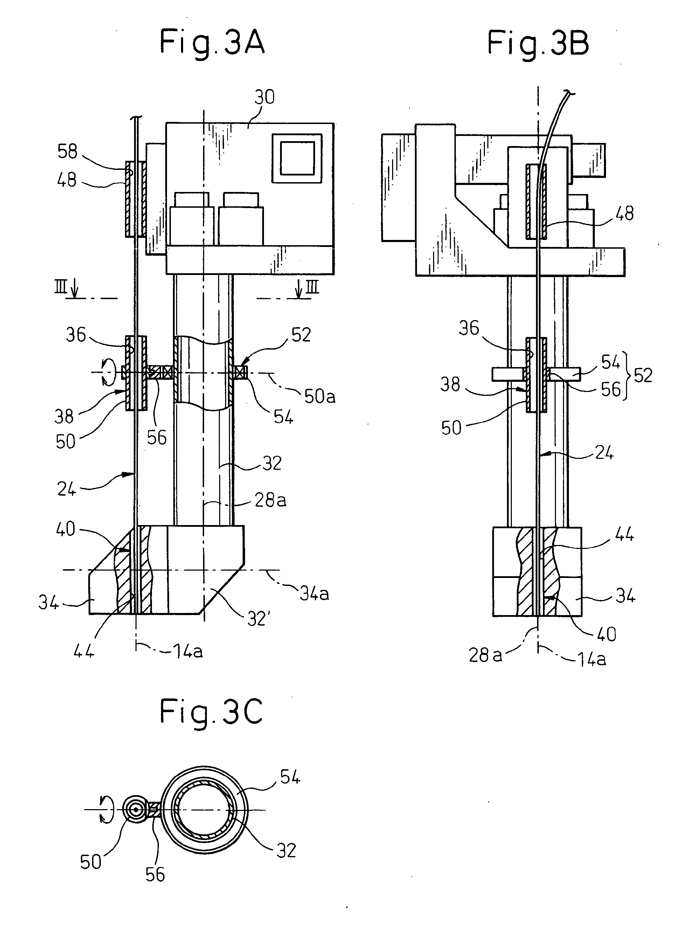

As shown in Figs. 2A and 2B, the umbilical member managing system according to one embodiment is provided with a manipulator 12 including a forearm 28 having a first longitudinal axis 28a, the forearm 28 including a base 30, a first wrist member 32 joined to the base 30 rotatably about the first axis 28a and a second wrist member 34 joined to the first wrist member 32 rotatably about a second axis 34a generally perpendicular to the first axis 28a; a working tool 14 mounted to the second wrist member 34 of the forearm 28 of the manipulator 12; an umbilical member 24 laid outside the forearm 28 between the base 30 and the second wrist member 34, and connected to the working tool 14; an umbilical member guiding section 38 provided in the forearm 28 and including a guide passage 36 (Figs. 3A and 3B) extending generally parallel to the first axis 28a to accommodate the umbilical member 24 in a guidable manner; and an umbilical member retaining section 40 provided in the second wrist member 34 for retaining the umbilical member 24 at a proper position relative to the working tool 14. The umbilical member guiding section 38 is configured to follow a rotating motion of the first wrist member 32 about the first axis 28a and to shift about the first axis 28a. The umbilical member retaining section 40 is configured to follow a rotating motion of the second wrist member 34 about the second axis 34a and to bend the umbilical member 24 in a radius not less than an allowable bend radius between the umbilical member guiding section 38 and the second wrist member 34.

A working-tool mount surface (or a flange surface) 42 is formed at the end of the second wrist member 34, and the working tool 14 is attached to the working-tool mount surface 42. The second wrist member 34 is further provided with a through hole 44 penetrating therethrough between the working-tool mount surface 42 and a surface opposed thereto (on a side away from the working tool 14). The through hole 44 constitutes the umbilical member retaining section 40, which has an inner diameter slightly larger than the outer diameter of the umbilical member 24, and extends in a direction along the axis 14a of the working tool 14.

The umbilical member 24 for supplying laser beam, material, signal, etc. to the working tool 14 is laid from the base 30 along the first wrist member 32 generally in parallel to the first axis 28a, is passed through the through hole 44, and is connected to the working tool 14 at an umbilical member connection point 46 provided at the base part of the working tool 14. It is preferred that the umbilical member 24 laid along the above-described path is guided and retained in a slidable manner at a suitable location. In the illustrated embodiment, a first retaining member 48 is provided on the base 30, and a second retaining member 50 is provided on the first wrist member 32. Each of the retaining members 48, 50 has a tubular shape, and the hollow portion thereof has an inner diameter sufficient to slidably receive the umbilical member 24.

The second retaining member 50 constitutes the umbilical member guiding section 38, which stably guides and retains the umbilical member 24 around the forearm 28 in a direction generally parallel to the first axis 28a. The second retaining member 50 is attached to the first wrist member 32 to be able to revolve about the first axis 28a by an attaching mechanism 52, in order to stably retain the umbilical member 24 during a rotational motion of the first wrist member 32 and of the second wrist member 34.

As shown in Figs. 3A and 3B, the attaching mechanism 52 is constructed from the combination of a first bearing 54 and a second bearing 56, and supports the second retaining member 50 as it revolves on the first wrist member 32. The first bearing 54 is provided to surround the outer circumference of the first wrist member 32, and the second bearing 56 is attached to the first bearing 54 so as to revolve about the first axis 28a. Thus, during the rotational motion of the first wrist member 32 about the first axis 28a, the second bearing 56 is free of the rotational motion. Through the second bearing 56, the second retaining member 50 is supported on the first bearing 54 in a manner to revolve about an axis 50a extending through the center of the second bearing 56 orthogonally to the first axis 28a. In this manner, the second retaining member 50 is attached to the first wrist member 32 with two rotational degrees of freedom ensured.

The umbilical member 24 is retained in a manner as to be slidable in the longitudinal direction of the umbilical member 24 by the tubular first retaining member 48 provided on the base 30. The hollow portion of the first retaining member 48 is formed as a guide passage 58 having an inner diameter for receiving the umbilical member 24 with a sufficient gap defined therebetween, and retains the umbilical member 24 so as to be shiftable within a predetermined range in a plane perpendicular to the longitudinal axis of the umbilical member 24. The umbilical member 24 is thereby retained or confined in the vicinity of the base 30 so as to maintain a predetermined movable range. In this connection, in place of the first retaining member 48, it is possible to adopt a retaining mechanism depending from, e.g., a ceiling of a factory using, e.g., a spring balancer, to ensure a similar operative effect.

After passed through the first retaining member 48, the umbilical member 24 is directed to the second retaining member 50 attached to the first wrist member 32, as a central member of the forearm, using the attaching mechanism 52. The hollow portion of the second retaining member 50 is formed as the guide passage 36 having an inner diameter for receiving the umbilical member 24 with a sufficient gap defined therebetween, and retains the umbilical member 24 so as to be slidably along the longitudinal axis thereof and to be shiftable within a predetermined range in a plane perpendicular to the longitudinal axis. Thus, during the rotational motion of the first wrist member 32 and/or the second wrist member 34 of the robot about the first axis 28a and /or the second axis 34a, the umbilical member 24 moves along the outer circumferential surface of the first wrist member 32 while showing a suitable bending and twisting behavior so as to maintain a bend radius not less than a minimum bend radius. At this time, by the function of the attaching mechanism 52, the second retaining member 50 can smoothly follow the motion of the umbilical member 24 to freely shift about the first axis 28a, so that it is possible to prevent excessive tension from being applied to the umbilical member 24.

Thus, the umbilical member managing system, according to the illustrated embodiment, is configured such that, on the manipulator 12 having a configuration wherein the second wrist member 34 is rotatable relative to the first wrist member 32 about the second axis 34a perpendicular to the first axis 28a, the tubular second retaining member 50 constituting the umbilical member guiding section 38 is attached to the first wrist member 32 revolutionarily about the first axis 28a, and the through hole 44 constituting the umbilical member retaining section 40 is formed in the second wrist member 34, so that, even when the first wrist member 32 and/or the second wrist member 34 generate a relatively large motion, it is possible to maintain the umbilical member 24 in a stable state, and thus to prevent the unstable supply of energy, material, etc.

For example, in the above configuration in which the working tool 14 is a laser processing nozzle, in order to perform laser processing on the workpiece W (Fig. 1), the working tool 14 is moved in various ways so as to be disposed in a suitable welding orientation relative to the workpiece W. During this operation, the umbilical member 24 connected to the working tool 14 tends to be displaced over a wide range while accompanying with the movement of the working tool 14, because of the relatively large minimum bend radius thereof. However, by adopting the umbilical member managing system according to the illustrated embodiment, it is possible to suppress the displacement of the umbilical member 24 in a small range.

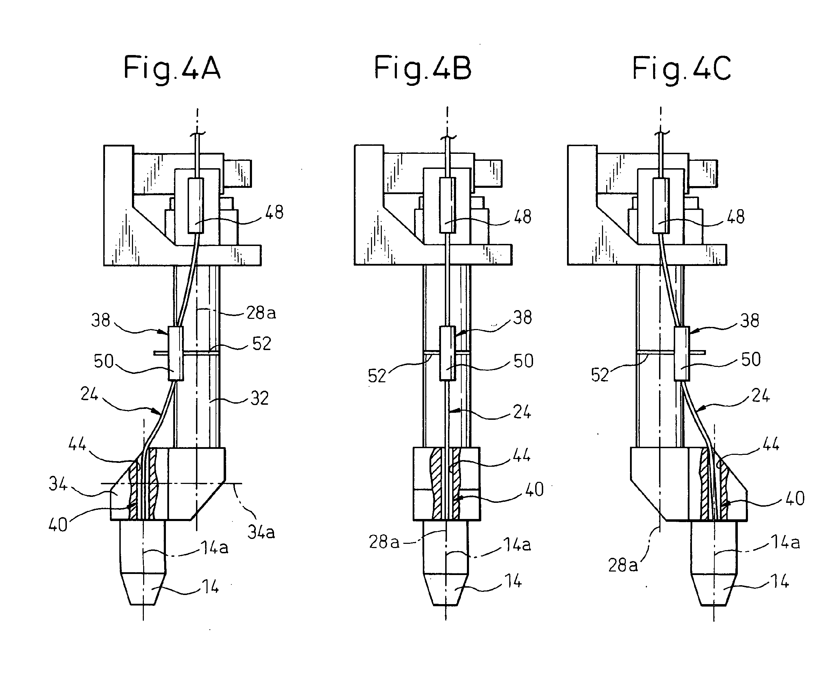

Figs. 4A to 4C show an example of the behavior of the umbilical member 24 during a period when the first wrist member 32 of the forearm 28 rotates about the first axis 28a over 180 degrees. Fig. 4A shows a state in the rotation angle of a first axis = -90 degrees, the first axis being the rotation control axis of the first wrist member 32; Fig. 4B shows a state in the first axis angle = 0 degree (i.e., a neutral angular position); and Fig. 4C shows a state in the first axis angle = +90 degrees. As shown in the drawings, when the first wrist member 32 rotates about the first axis 28a, the position of the working tool 14 changes along a circular arc with the axis 14a thereof maintained in parallel to the first axis 28a. During this operation, the umbilical member 24 is displaced, accompanied by the shifting motion of the second retaining member 50 constituting the umbilical member guiding section 38, in a manner as to be wound loosely around the first wrist member 32, while generating a bending and twisting behavior of which the bend radius is not less than the minimum or allowable bend radius.

During the rotation of the first wrist member 32, the umbilical member 24 can move in the longitudinal direction thereof without being constrained by the first retaining member 48. Therefore, in the first retaining member 48 on the base 30, the displacement of the umbilical member 24 is suppressed without exerting excessive tension to the umbilical member 24, so that the lateral movement of the umbilical member 24 in the vicinity of the base 30 can be prevented.

Also, during the rotation of the first wrist member 32, the second retaining member 50 smoothly follows the motion of the umbilical member 24 to move over an angle smaller than the rotation angle of the first wrist member 32 about the first axis 28a. During this operation, the umbilical member 24 can move in the longitudinal direction thereof without being constrained by the second retaining member 50. Therefore, in the second retaining member 50 on the first wrist member 32, it is surely prevented that the umbilical member 24 is subjected to excessive tension and generates excessive bending and twisting. In this connection, the second retaining member 50 shifts in a predetermined orbit along the outer circumference of the first wrist member 32, so that the umbilical member 24 is displaced in a stable and gentle manner, and thus it is possible to maintain the orientation of the umbilical member 24 as to be substantially along the forearm 28 and to prevent the interference between the umbilical member 24 and the surrounding objects.

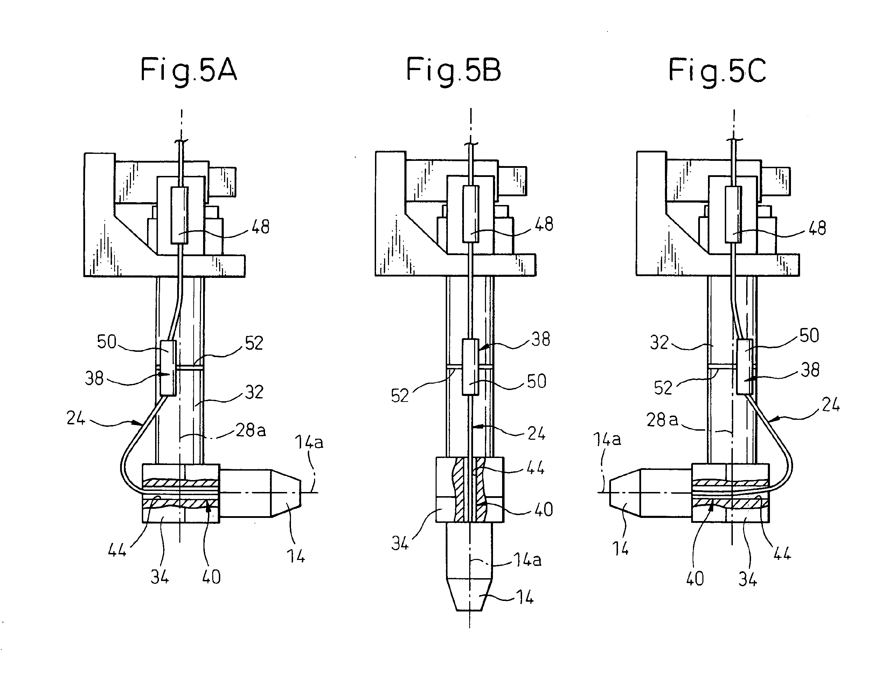

Figs. 5A to 5C show an example of the behavior of the umbilical member 24 during a period when the second wrist member 34 of the forearm 28 operates in rotation about the second axis 34a over 180 degrees. Fig. 5A shows a state in the rotation angle of a second axis = - 90 degrees, the second axis being the rotation control axis of the second wrist member 34; Fig. 5B shows a state in the second axis angle = 0 degree (i.e., a neutral angular position); and Fig. 5C shows a state in the second axis angle = +90 degrees. In this connection, as shown in Fig. 3A, the second wrist member 34 is provided at a lateral side of the first wrist member 32, and in the neutral position (Fig. 5B), the axis 14a of the working tool 14 is offset laterally in parallel from the first axis 28a.

As illustrated, when the second wrist member 34 is rotated about the second axis 34a, the position of the working tool 14 changes so as to cause a rocking motion of the axis 14a thereof. During this operation, the umbilical member 24 is displaced, accompanied by the shifting motion of the second retaining member 50 constituting the umbilical member guiding section 38, while generating a bending and twisting behavior of which the bend radius is not less than the minimum or allowable bend radius. Further, during this operation, the umbilical member 24 can move in the longitudinal direction thereof without being constrained by the second retaining member 50. Consequently, in the first and second retaining members 48, 50, the displacement of the umbilical member 24 is suppressed without exerting excessive tension to the umbilical member 24, so that the projecting motion of the umbilical member 24 in the direction away from the working tool 14 can be minimized. In this connection, the second retaining member 50 is supported on the first wrist member 32 in a manner rotatable about the axis 50a, as already described, so that, at an instant when the second wrist member 34 is located at, e.g., a position shown in Fig. 5A or 5C, the second retaining member 50 can rotate about the axis 50a by a suitable angle (i.e., an angle smaller than the rotating angle of the second wrist member 34), whereby it is possible to effectively suppress the bending and twisting of the umbilical member 24.

While the present invention has been described with reference to a typical embodiment, the present invention is not restricted to the above embodiment, but various modifications can be made. For example, the attaching mechanism 52 of the second retaining member 50 may not include the second bearing 56, in which the number of rotational degrees of freedom of the second retaining member 50 is reduced to one (i.e., a rotation about the first axis 28a). Alternatively, the second retaining member 50 may be fixedly attached to the first wrist member 32 in the same way as the first retaining member 48.

Also, the above embodiment includes the manipulator 12, in which the first wrist member 32 is composed of an elongated portion extending along the first axis 28a from the base 30 of the forearm 28. However, in place of this, a manipulator including a first wrist member 32' (Fig. 3A), composed of a portion adjoining the second wrist member 34 at the distal end of an elongated portion fixed to the base 30, may be adopted in the umbilical member managing system according to the present invention. In this arrangement, the same operative effect as in the above-described embodiment is also obtainable.

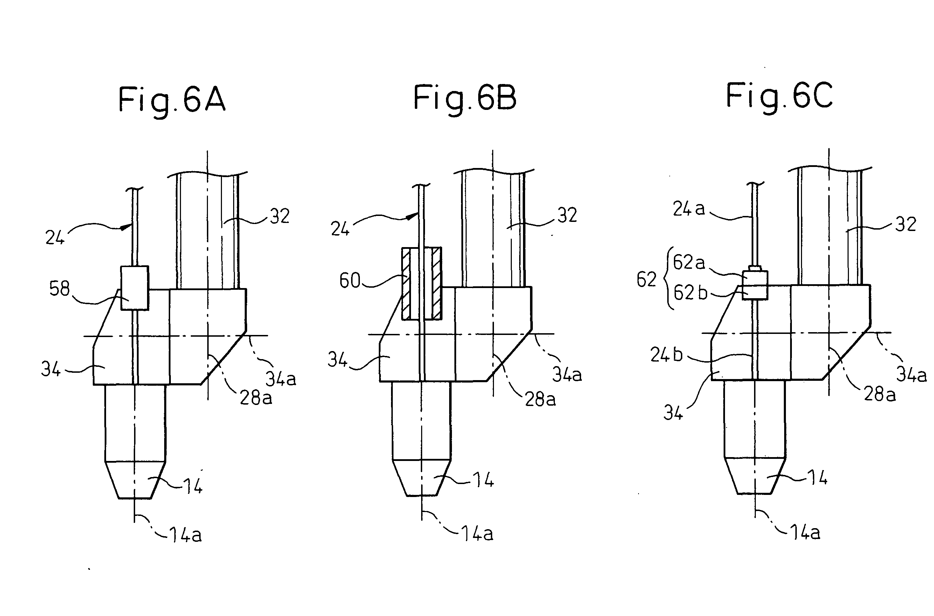

Further, in the above embodiment, the through hole 44 formed in the second wrist member 34 is adopted as the umbilical member retaining section 40, but the umbilical member retaining section 40 having different configurations may also be adopted in the present invention. For example, as shown in Fig. 6A, the umbilical member retaining section 40 may be composed of a clamp member 58 provided in the second wrist member 34. In this arrangement, the umbilical member 24 is secured to the clamp member 58. Although it is difficult, unlike the above-mentioned through hole 44, to arrange the clamp member 58 on the line of the axis 14a of the working tool 14, it is preferred that the clamp member 58 is arranged as close to the axis 14a as possible. The clamp member 58 mechanically fixes the umbilical member 24 and, unlike the first retaining member 48 or the second retaining member 50, does not permit the sliding movement of the umbilical member 24. However, the distance between the clamp member 58 and the working tool 14 is short, and thus no problem should arise even when the umbilical member 24 is fixed.

Alternatively, as shown in Fig. 6B, in place of the clamp member 58 having a fixing performance, a tubular retaining member 60, similar to the first retaining member 48 or the second retaining member 50, may be used as the umbilical member retaining section 40. In this configuration, it is also preferred that the retaining member 60 is arranged as close to the axis 14a of the working tool 14 as possible.

Alternatively, as shown in Fig. 6C, in place of the clamp or retaining member 58, 60, a connector 62 including a first connector member 62a and a second connector member 62b, detachably assembled with each other, may be used as the umbilical member retaining section 40. In this arrangement, the umbilical member 24 includes a first portion 24a guided by the umbilical member guiding section 38 (Fig. 3A) and a second portion 24b connected to the working tool 14, which are able to be connected to and disconnected from each other. The first portion 24a of the umbilical member 24 is attached to the first connector member 62a of the connector 62, and the second portion 24b of the umbilical member 24 is attached to the second connector member 62b of the connector 62. This configuration can be easily adopted especially when the working tool 14 is a laser processing nozzle or a sealing nozzle. In the case where the working tool 14 is a laser processing nozzle, an optical fiber connector, or a combination of it and an assist gas tube, is used as the connector 62. In the case where the working tool 14 is a sealing nozzle, a tube connector capable of preventing the leakage of the sealant is used as the connector 62.

While the invention has been described with reference to specific preferred embodiments, it will be understood by those skilled in the art that various changes and modifications may be made thereto without departing from the spirit and scope of the following claims.

## Claims

1. An umbilical member managing system comprising:
a manipulator (12) including a forearm (28) having a first longitudinal axis (28a), said forearm including a base (30), a first wrist member (32) joined to said base and rotatable about said first axis and a second wrist member (34) joined to said first wrist member and rotatable about a second axis (34a) generally perpendicular to said first axis;
a working tool (14) mounted to said second wrist member of said forearm of said manipulator;
an umbilical member (24) laid outside said forearm between said base and said second wrist member and connected to said working tool;
an umbilical member guiding section (38) provided in said forearm and including a guide passage (36) extending generally parallel to said first axis to accommodate said umbilical member in a guidable manner, said umbilical member guiding section being configured to follow a rotating motion of said first wrist member about said first axis and to shift about said first axis; and
an umbilical member retaining section (40) provided in said second wrist member for retaining said umbilical member at a proper position relative to said working tool, said umbilical member retaining section being configured to follow a rotating motion of said second wrist member about said second axis and to bend said umbilical member in a radius not less than an allowable bend radius between said umbilical member guiding section and said second wrist member.

2. An umbilical member managing system as set forth in claim 1, wherein said umbilical member retaining section comprises a through hole (44) provided in said second wrist member, said umbilical member being received in said through hole in a displaceable manner.

3. An umbilical member managing system as set forth in claim 1, wherein said umbilical member retaining section comprises a clamp member (58) provided in said second wrist member, said umbilical member being secured to said clamp member.

4. An umbilical member managing system as set forth in claim 1, wherein said umbilical member includes a first portion (24a) guided by said umbilical member guiding section and a second portion (24b) connected to said working tool, said first portion being able to be connected to and disconnected from said second portion; and wherein said umbilical member retaining section comprises a first connector member (62a) attached to said first portion of said umbilical member and a second connector member (62b) attached to said second portion of said umbilical member, said first connector member being detachably assembled with said second connector member.

5. An umbilical member managing system as set forth in any one of claims 1 to 4, wherein said working tool comprises a laser processing nozzle; and wherein said umbilical member includes an optical fiber cable.

6. An umbilical member managing system as set forth in any one of claims 1 to 4, wherein said working tool comprises an arc welding torch; and wherein said umbilical member includes a welding wire.

7. An umbilical member managing system as set forth in any one of claims 1 to 4, wherein said working tool comprises a sealing nozzle; and wherein said umbilical member includes a sealant supply pipe.

8. An umbilical member managing system comprising:
a manipulator (12) including a forearm (28) having a first longitudinal axis (28a), said forearm including a base (30), a first wrist member (32) joined to said base and rotatable about said first axis and a second wrist member (34) joined to said first wrist member and rotatable about a second axis (34a) generally perpendicular to said first axis;
a working tool (14) mounted to said second wrist member of said forearm of said manipulator;
an umbilical member (24) laid outside said forearm between said base and said second wrist member and connected to said working tool; and
an umbilical member retaining section (40) provided in said second wrist member for retaining said umbilical member at a proper position relative to said working tool, said umbilical member retaining section being configured to follow a rotating motion of said second wrist member about said second axis and to bend said umbilical member in a radius not less than an allowable bend radius between said base and said second wrist member;
wherein said umbilical member retaining section comprises a through hole (44) provided in said second wrist member, said umbilical member being received in said through hole in a displaceable manner.

9. An umbilical member managing system comprising:
a manipulator (12) including a forearm (28) having a first longitudinal axis (28a), said forearm including a base (30), a first wrist member (32) joined to said base and rotatable about said first axis and a second wrist member (34) joined to said first wrist member and rotatable about a second axis (34a) generally perpendicular to said first axis;
a working tool (14) mounted to said second wrist member of said forearm of said manipulator;
an umbilical member (24) laid outside said forearm between said base and said second wrist member and connected to said working tool; and
an umbilical member retaining section (40) provided in said second wrist member for retaining said umbilical member at a proper position relative to said working tool, said umbilical member retaining section being configured to follow a rotating motion of said second wrist member about said second axis and to bend said umbilical member in a radius not less than an allowable bend radius between said base and said second wrist member;
wherein said umbilical member retaining section comprises a clamp member (58) provided in said second wrist member, said umbilical member being secured to said clamp member.

10. An industrial robot system comprising an umbilical member managing system as set forth in any one of claims 1 to 9.
